# EUROPEAN PATENT APPLICATION

(11) **EP 4 498 068 A1**
(43) Date of publication of application: **29.01.2025**
(21) Application number: 23188633.4
(22) Date of filing: 31.07.2023
(51) Int. Cl.: G01N 21/3563, G01N 21/33, G01N 21/21, G01N 21/359, G01N 21/47, G01N 21/84, G01N 33/00

(54) **DEVICE FOR SPECULAR-FREE SPECTRAL IMAGE CAPTURE OF A SPECIMEN OF A PLANT AND METHOD THEREOF**

(30) Priority: 28.07.2023 PT 2023118838
(71) Applicant: Xpectraltek, Lda, 4705-827 Braga (PT)
(72) Inventor: PAPADAKIS, Vasileios, 71307 Heraklion (GR)
(74) Representative: Patentree

(57) **Abstract**

The present document discloses a device for specular-free spectral image capture of a specimen part of a plant, comprising a ring illuminator (103), comprising a plurality of narrowband light emitters (101), a diffuser (107) arranged to diffuse the emitted light, an illuminator polarizer (105) arranged to polarize the diffused light, a light-tight chamber (201) configured to receive a specimen comprising a shutter (205) for closing an opening of the chamber (201), a camera (102) arranged in the centre of the ring illuminator (103), a camera polarizer (105) optically aligned perpendicularly in respect of the illuminator polarizer (105) for cross-polarization image capture, an electronic data processor configured for actuating the ring illuminator (103), receiving a reflected image captured by the camera (102) of the specimen placed in the chamber (201), and recording the captured image. It is further disclosed a method of operation said device and a system comprising a plurality one or more of the devices for specular-free spectral image capture of a specimen part of a plant.

## Description

### TECHNICAL FIELD

The present disclosure relates to a device for specular-free spectral image capture of a specimen of a plant, and method thereof.

### BACKGROUND

The document CN108827883A relates to the technical field of fruit and vegetable detection equipment, and discloses a portable fruit and vegetable internal decay deterioration detection device and a detection method thereof. The device comprises: a box body, wherein an accommodating space is configured inside the box body; an illumination structure arranged in the accommodating space for illuminating the fruit and vegetable to be tested; a fruit and vegetable support structure disposed inside the box body and capable of reciprocating up and down along a longitudinal direction of the box body; a spectral conduction device disposed inside the box body and below the fruit and vegetable support structure for transmitting a spectral signal in the fruit and vegetable to be tested; a spectral analysis device disposed inside the box body and connected to the spectral conduction device for obtaining the spectral signal in the fruit and vegetable to be tested; and a control cabinet electrically connected to the spectral analysis device.

This first document focus on the dark chamber dimensions that can fit a fruit of different dimensions and how the system adapts on fruits with different heights. The device is only acquiring information through a point, and not in two dimensions using a camera sensor. This sensor is described to detect only 4 wavelengths in the near infrared, and in particular 800, 815, 860 and 870nm.

The document CN109238985 relates to a plant leaf chlorophyll content detection device and detection method based on three wavelengths. The detection device is characterized in that the device comprises a housing and a detection system arranged in the housing, one side of the housing is provided with a groove extending in the housing as an object-placing platform, an upper wall and a lower wall of the groove are respectively provided with a light through hole in an opposite manner, three wavelengths of parallel incident lights generated by the detection system penetrate through the light through holes of the object-placing platform and are detected by a photoelectric detection sensor, the photoelectric detection sensor is connected with a microcontroller, the detection system also comprises a display unit, the display unit is connected with the microcontroller, the housing is in an inverted L shape, the object-placing platform is arranged at a downward extending portion of the inverted L shape, and a horizontal extending portion of the inverted L shape is a handheld handle.

This second document discloses a device is composed by a housing, with a stage that has a light passing hole, and three-wavelength parallel incident light from three LED light sources, that illuminate the plant's leaf. A photoelectric detection sensor achieves detection, which is a single point. The three operating wavelengths are 460, 650 and 940nm, which are used to calculate one index, related to the plant chlorophyll.

These facts are disclosed in order to illustrate the technical problem addressed by the present disclosure.

### GENERAL DESCRIPTION

The present document discloses a device for specular-free spectral image capture of a specimen part of a plant, comprising: a ring illuminator comprising a plurality of narrow-band light emitters each arranged to emit a wavelength range; a diffuser arranged to diffuse the emitted light, thus, achieving light homogeneity; an illuminator polarizer arranged to polarize the diffused light; a light-tight chamber configured to receive a specimen comprising a shutter for closing an opening of the chamber; wherein the shutter comprises a resilient light-seal for accommodating a stem or branch of the specimen such that the specimen is not detached from the plant during image capture; a camera arranged in the centre of the ring illuminator; a camera polarizer optically aligned perpendicularly in respect of the illuminator polarizer for cross-polarization image capture, thus, cutting off the specular reflections from the sample surface; an electronic data processor configured for actuating the illuminator, receiving a reflected image captured by the camera of the specimen placed in the chamber, and recording the captured image; wherein the chamber is coated with one or more light-absorbing or light-diffusing materials.

In an embodiment, the shutter is slidable to enclose the chamber.

In an embodiment, the light-seal is a strip of a resilient material for shutting the opening of the chamber to allow a specimen stem or branch to pass through the chamber opening while preserving the light-tightness of the chamber, in particular the wherein the resilient material is a polymeric foam or a brush seal.

In an embodiment, the disclosed device further comprising a geolocation system/receiver for providing a geospatial position of an image capture, for example, in a work field; and wherein the electronic data processor is further configured for recording a geolocation obtained by a geolocation receiver when an image is captured.

In an embodiment, the disclosed device further comprising a shutter actuator for closing and opening the shutter, wherein the electronic data processor is further configured for receiving a user input, actuating the shutter actuator to close the shutter, receiving the reflected image captured by the camera of the specimen placed in the chamber, and recording the geolocation obtained by the geolocation receiver when the image is captured.

In an embodiment, the disclosed device further comprising a display for showing the reflected image captured by the camera and wherein the electronic data processor is further configured for driving the display to show the image being captured by the camera while waiting for user input, thus, to show the specimen image to be captured to ensure adequate positioning of the specimen before capture.

In an embodiment, the electronic data processor is configured for actuating each emitter of the plurality of light narrow-band emitters in sequence for capturing a reflected image corresponding to each emitter.

In an embodiment, the electronic data processor is configured for merging the captured reflected images corresponding to each emitter into a multispectral image.

In an embodiment, the device software, or a remote cloud-based software, may be used to align the captured reflected images to obtain image registration.

In an embodiment, the electronic data processor is further configured for driving the display to show the merged image.

In an embodiment, the electronic data processor is configured for generating a heat map from the multispectral images and from corresponding geolocation obtained by the geolocation receiver when each image is captured.

In an embodiment, the wavelength ranges of the plurality of narrow-band light emitters are not overlapping.

In an embodiment, the disclosed device further comprising an array sensor, wide-angle objective and the electronic data processor being configured for correcting the optical deformation introduced by the wide-angle objective.

In an embodiment, the ring illuminator comprises a plurality of light narrow-band emitters each arranged to emit an individual wavelength in the UV, monochromatic VIS and NIR spectra.

In an embodiment, the plurality of light narrow-band emitters comprises an UV emitter, a red emitter, a green emitter, a blue emitter and a NIR infrared emitter.

In an embodiment, the disclosed device further comprising a humidity, temperature sensor and the electronic data processor being configured for recording humidity and temperature when an image is captured.

In an embodiment, the disclosed device further comprising a temperature sensor, or a humidity sensor, or an atmospheric pressure sensor, or combinations thereof, and the electronic data processor being configured for recording temperature, or humidity, or atmospheric pressure, or combinations thereof, when an image is captured.

In an embodiment, the geolocation system is a satellite geolocation system, in particular GPS, GLONASS, or Galileo.

It is also disclosed a method for operating a device for specular-free spectral image capture of a specimen part of a plant, the device comprising a ring illuminator comprising a plurality of narrow-band light emitters each arranged to emit a wavelength range; a diffuser arranged to diffuse the emitted light; an illuminator polarizer arranged to polarize the diffused light; a light-tight chamber configured to receive a specimen comprising a shutter for closing an opening of the chamber; wherein the shutter comprises a resilient light-seal for accommodating a stem or branch of the specimen such that the specimen is not detached from the plant during image capture; a camera arranged in the centre of the ring illuminator; a camera polarizer optically aligned perpendicularly in respect of the illuminator polarizer for cross-polarization image capture; a geolocation receiver for providing a geospatial position of an image capture; and an electronic data processor; wherein the chamber is coated with one or more light-absorbing or light-diffusing materials; wherein the method comprises: actuating the illuminator; receiving a reflected image captured by the camera of the specimen placed in the chamber; and recording the captured image.

In an embodiment, the method for operating the disclosed device further comprising the preceding steps of receiving a specimen in the light-tight chamber; closing an opening of the chamber by a shutter.

In an embodiment, the method for operating the disclosed device further comprising the steps of: recording a geolocation obtained by the geolocation receiver when an image is captured; and, optionally, generating a heat map from the multispectral images and from corresponding geolocation obtained by the geolocation receiver when each image is captured.

It is also disclosed a system comprising one or more of the disclosed devices for specular-free spectral image capture of a specimen part of a plant connected via a satellite or a data network connection, in particular the system comprising a remote server comprising a database for storing and retrieving captured images and respective geolocation positions, and optionally, environmental variables captured with said images, further in particular the environmental variables comprising temperature, humidity, atmospheric pressure, or combinations thereof, and optionally computer-implemented vegetation models.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a specular-free spectral image capture of a specimen of a plant.
**Figure 2****:** Schematic representation of an embodiment of a device for specular-free spectral image capture of a specimen of a plant.
**Figure 3****:** Heat map representation of the multispectral images with the corresponding geolocation.

### DETAILED DESCRIPTION

It is disclosed a multispectral camera for the acquisition of data from a leaf surface inside a controlled dark chamber.

The camera having a plurality of band pass light sources arranged around a circular orientation, thus providing a ring illumination, wherein the image sensor is placed within the centre of the circle or illumination.

Light passes through a diffuser and then from a linear polarizer to correct illumination distribution on the sample surface.

During operation illumination is occurring in steps in a series, that is comprised by each step to enable each individual band pass light sources. Light is reflected on the specimen surface and returns to the detection system.

Light first passes through a linear polarizer in a cross-polarization arrangement to avoid any specular reflections caused by the glossiness of the specimen's surface. Light is then collected, in synchronization with the series of band pass light sources, through an objective lens and focused on a camera sensor for fast image acquisition. The time necessary for capturing each image depends on many factors, e.g., how bright is the image, what is the desired image capture speed, among others.

All light sources and image sensor are controlled by a microcontroller for autonomous operation.

During acquisition, the multispectral camera is further acquiring information regarding a spatial position, temperature and relative humidity inside the dark chamber.

Having a compact construction and an isolated and environment for acquisitions, allows the inclusion of further elements, like a GPS and environmental sensors, within the body of the camera. Further, it allows a high integration of electronics and mechanics, namely the use of a microcontrollers and combining power and data, resulting in an loT device.

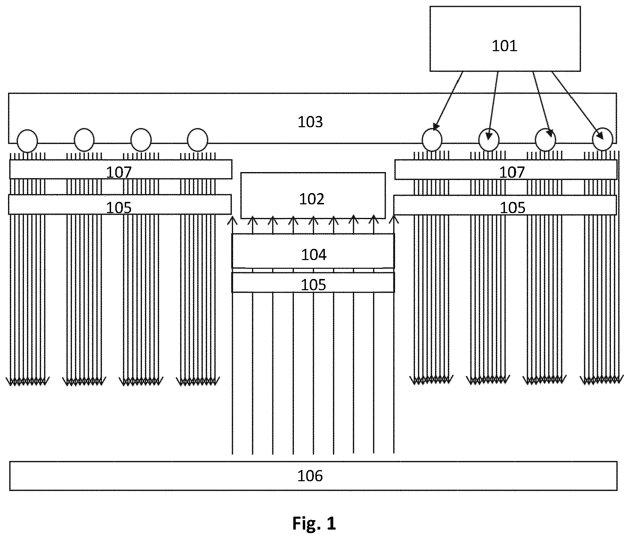

**Figure 1** shows a schematic representation of a specular-free spectral image capture of a specimen of a plant, where **101** represents narrow band-emitters, **102** represents a camera, **103** represents ring illuminator, **104** represents objective lens, **105** represents a polarizer, **106** represents ground, and **107** represents diffuser layer.

It is also disclosed a spectral camera comprising:
an image sensor;
a camera lens;
a set of a plurality of monochromatic light sources, arranged in bundles around a circular arrangement;
wherein the image sensor is arranged within the centre of illumination, to capture images incident through each of the monochromatic illumination, said monochromatic light sources being selectively enabled/disabled in a rotation around the centre of illumination.

In an embodiment, the diffuser and linear polarizer filters are placed in the optical path of the camera between the image sensor and the light sources.

In an embodiment, a linear actuator is configured for opening a door, or lid, to enter the specimen and closing the doorto isolate measurement from the environment.

In an embodiment, the spectral camera is configured to capture in synchronization one image for each of the monochromatic light sources.

In an embodiment, the camera lens is an assembly of optical lenses.

In an embodiment, the monochromatic light sources are LED sources.

In an embodiment, the monochromatic light sources comprises 7 or more different wavelength bands, in particular 11 or more different wavelength bands.

An embodiment comprises monochromatic light sources, covering the full UV-VIS-NIR range, 350nm-1200nm.

An embodiment comprises comprising monochromatic light sources covering the sensitivity spectral range of the image sensor.

In an embodiment, an interconnected network, e.g., an loT network, comprises a plurality of the disclosed device.

The disclosure provides, namely, the following advantages:
Cost effective solution;
Robust, fast, accurate and automated solution;
User friendly solution, portable, light weight, no external power, easy user interface;
Wide wavelength sensitivity range, e.g., from 350nm UV to 1200nm NIR;
High spatial resolution, 2MPixel with the capability to go up to 20MPixels or more;
High number of bandpass spectral illumination bands, e.g., 20, that cover all the sensitivity range of the sensor;
Continuous acquisition from each monochromatic light source;
Complete and user friendly acquisition software.

According to an embodiment, the disclosure describes the following optical path from the illumination source to captured image:
The light from the source is evenly distributed across the dark chamber;
The light from the source is linearly polarized;
The homogenously distributed linear polarized light is reaching the specimen's surface;
The reflected light is filtered with a linear polarizer in cross polarization with the illumination linear polarizer;
Filtered light is collected by the objective lens;
The objective lens is coupled with the camera image sensor;
Light is monochromatized by the use of bandpass illumination sources;
Bandpass Illumination sources are selected through the microcontroller.

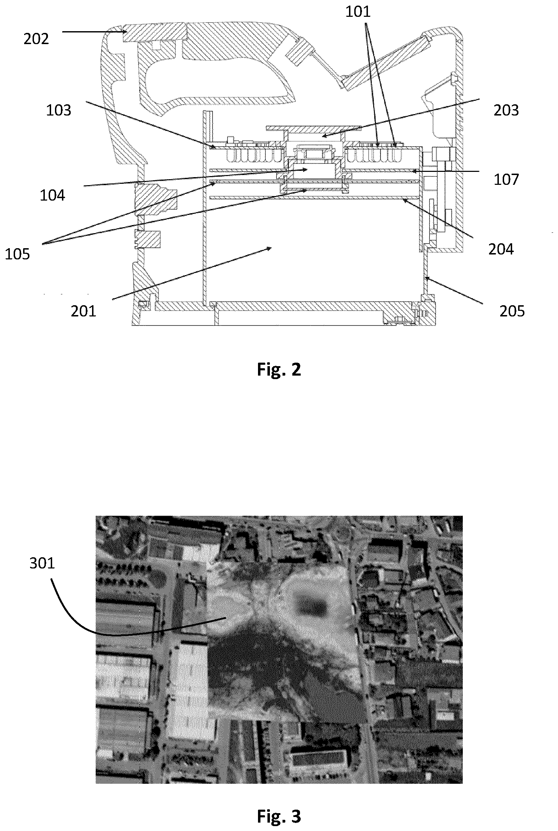

**Figure 2** shows a schematic representation of an embodiment of a device for specular-free spectral image capture of a specimen of a plant, where **101** represents narrow band-emitters, **103** represents ring illuminator, **104** represents objective lens, **105** represents a polarizer, **107** represents diffuser layer, **201** represents dark chamber, **202** represents GPS module, **203** represents array sensor, **204** represents protective glass, and **205** represents entrance door.

**Figure 3** shows a heat map representation of the multispectral images with the corresponding geolocation, obtained by the geolocation receiver when each image is captured, wherein **301** represents a measured area.

Spectral imaging refers to the process of capturing images using multiple bands across the electromagnetic spectrum. Unlike a typical camera that captures light in the visible spectrum's three wavelength bands (red, green, and blue - RGB), spectral imaging employs a diverse range of techniques that extend beyond RGB. This spectral image is defined as the image that contains light information from a short wavelength band of the electromagnetic spectrum.

Multispectral imaging employs a range of filters and illumination techniques to capture a limited number of spectral bands, e.g., ranging from three to thirty.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. A device for specular-free spectral image capture of a specimen part of a plant, comprising:
a ring illuminator comprising a plurality of narrow-band light emitters each arranged to emit a wavelength range;
a diffuser arranged to diffuse the emitted light;
an illuminator polarizer arranged to polarize the diffused light;
a light-tight chamber configured to receive a specimen comprising a shutter for closing an opening of the chamber;
wherein the shutter comprises a resilient light-seal for accommodating a stem or branch of the specimen such that the specimen is not detached from the plant during image capture;
a camera arranged in the centre of the ring illuminator;
a camera polarizer optically aligned perpendicularly in respect of the illuminator polarizer for cross-polarization image capture;
an electronic data processor configured for actuating the illuminator, receiving a reflected image captured by the camera of the specimen placed in the chamber, and recording the captured image;
wherein the chamber is coated with one or more light-absorbing or light-diffusing materials.

2. The device according to the previous claim wherein the shutter is slidable to enclose the chamber; preferably comprising a shutter actuator for closing and opening the shutter, wherein the electronic data processor is further configured for receiving a user input, actuating the shutter actuator to close the shutter, receiving the reflected image captured by the camera of the specimen placed in the chamber, and recording the geolocation obtained by the geolocation receiver when the image is captured.

3. The device according to any of the previous claims wherein the light-seal is a strip of a resilient material for shutting the opening of the chamber to allow a specimen stem or branch to pass through the chamber opening while preserving the light-tightness of the chamber, in particular the wherein the resilient material is a polymeric foam or a brush seal.

4. The device according to any of the previous claims further comprising a geolocation system for providing a geospatial position of an image capture; and wherein the electronic data processor is further configured for recording a geolocation obtained by a geolocation receiver when an image is captured; preferably wherein the geolocation system is a satellite geolocation system, in particular GPS, GLONASS, or Galileo.

5. The device according to any of the previous claims comprising a display for showing the reflected image captured by the camera and wherein the electronic data processor is further configured for driving the display to show the image being captured by the camera while waiting for user input.

6. The device according to any of the previous claims wherein the electronic data processor is configured for actuating each emitter of the plurality of light narrow-band emitters in sequence for capturing a reflected image corresponding to each emitter.

7. The device according to the previous claim wherein the electronic data processor is configured for merging the captured reflected images corresponding to each emitter into a multispectral image; preferably wherein the electronic data processor is configured for generating a heat map from the multispectral images and from corresponding geolocation obtained by the geolocation receiver when each image is captured.

8. The device according to any of the previous claims wherein the wavelength ranges of the plurality of narrow-band light emitters are not overlapping.

9. The device according to any of the previous claims comprising an array sensor, wide-angle objective and the electronic data processor being configured for correcting the optical deformation introduced by the wide-angle objective.

10. The device according to any of the previous claims wherein the ring illuminator comprises a plurality of light narrow-band emitters each arranged to emit an individual wavelength in the UV, monochromatic VIS and NIR spectra, preferably wherein the plurality of light narrow-band emitters comprises an UV emitter, a red emitter, a green emitter, a blue emitter and a NIR infrared emitter.

11. The device according to any of the previous claims comprising a humidity, temperature sensor and the electronic data processor being configured for recording humidity and temperature when an image is captured.

12. A method for operating a device for specular-free spectral image capture of a specimen part of a plant, the device comprising a ring illuminator comprising a plurality of narrow-band light emitters each arranged to emit a wavelength range; a diffuser arranged to diffuse the emitted light; an illuminator polarizer arranged to polarize the diffused light; a light-tight chamber configured to receive a specimen comprising a shutter for closing an opening of the chamber; wherein the shutter comprises a resilient light-seal for accommodating a stem or branch of the specimen such that the specimen is not detached from the plant during image capture; a camera arranged in the centre of the ring illuminator; a camera polarizer optically aligned perpendicularly in respect of the illuminator polarizer for cross-polarization image capture; a geolocation receiver for providing a geospatial position of an image capture; and an electronic data processor;
wherein the chamber is coated with one or more light-absorbing or light-diffusing materials;
wherein the method comprises:
actuating the illuminator;
receiving a reflected image captured by the camera of the specimen placed in the chamber; and
recording the captured image.

13. The method for operating a device according to the previous claim further comprising the preceding steps of:
receiving a specimen in the light-tight chamber;
closing an opening of the chamber by a shutter.

14. The method for operating a device according to claims 12 or 13 further comprising the steps of:
recording a geolocation obtained by the geolocation receiver when an image is captured; and, optionally,
generating a heat map from the multispectral images and from corresponding geolocation obtained by the geolocation receiver when each image is captured.

15. A system comprising one or more of the devices for specular-free spectral image capture of a specimen part of a plant, of any claims 1-16, connected via a satellite or a data network connection, in particular the system comprising a remote server comprising a database for storing and retrieving captured images and respective geolocation positions, and optionally, environmental variables captured with said images, further in particular the environmental variables comprising temperature, humidity, atmospheric pressure, or combinations thereof, and optionally computer-implemented vegetation models.
